# FASCICULE DE BREVET EUROPEEN

(11) **EP 1 768 898 B1**
(45) Date de publication et mention de la délivrance du brevet: **18.06.2008**
(21) Numéro de dépôt: 05761099.0
(22) Date de dépôt: 07.07.2005
(51) Int. Cl.: B64C 9/24

(54) **VOLET MOBILE DE BORD D'ATTAQUE D'UNE AILE PRINCIPALE DE LA VOILURE D'UN AERONEF**
BEWEGLICHE VORDERKANTENKLAPPE FÜR EINEN HAUPTFLÜGEL DER TRAGFLÄCHEN EINES FLUGZEUGS
MOBILE LEADING-EDGE FLAP FOR A MAIN WING OF THE AEROFOILS OF AN AIRCRAFT

(30) Priorité: 09.07.2004 BE 200400342
(43) Date de publication de la demande: 04.04.2007
(73) Titulaire: Sonaca S.A., 6041 Gosselies (BE)
(72) Inventeur: BERTIN, Paul, B-4000 Liège (BE); CORMAN, Alain, B-1170 Bruxelles (BE); HAUTECOEUR, Michel, B-1341 Ceroux-Mousty (BE); OVERBERGH, Christian, B-5590 Serinchamps (BE)
(74) Mandataire: Poulin, Gérard
(86) Numéro de dépôt international: PCT/EP2005/053253
(87) Numéro de publication internationale: WO 2006/010699

(56) Documents cités:
- EP-A- 1 066 914
- EP-A- 1 327 489
- US-A- 6 135 395
- PATENT ABSTRACTS OF JAPAN vol. 2003, no. 12, 5 décembre 2003 (2003-12-05) -& JP 2003 291892 A (JAPAN AIRCRAFT MFG CO LTD), 15 octobre 2003 (2003-10-15)

## Description

### DOMAINE TECHNIQUE

La présente invention se rapporte de façon générale à un volet mobile de bord d'attaque d'une aile principale de la voilure d'un aéronef, ce volet comprenant notamment un revêtement aérodynamique présentant une zone frontale, dite zone sensible aux impacts d'oiseaux. Ce type de volet mobile est conçu de façon à limiter les dommages qu'il pourrait subir suite à l'impact d'un oiseau en vol de croisière, au sol lors d'opérations de manoeuvre de l'aéronef, ou encore durant les phases de décollage et d'atterrissage.

A titre indicatif, ce volet mobile est destiné à constituer tout ou partie du bord d'attaque d'une aile principale de la voilure de l'aéronef.

### ETAT DE LA TECHNIQUE ANTERIEURE

Sur les aéronefs, chacune des deux ailes principales de la voilure est généralement équipée de volets mobiles hypersustentateurs, montés au bord d'attaque et au bord de fuite de l'aile.

De façon connue, les volets sont déployés pour les phases d'atterrissage et de décollage afin d'augmenter la portance à faible ou moyenne vitesse. Par ailleurs, en vol de croisière à grande vitesse, les volets mobiles sont rentrés pour limiter la résistance à l'avancement de l'aéronef. De plus, toujours de façon connue de l'homme du métier, le déplacement de chaque volet s'effectue à l'aide de mécanismes logés dans une partie avant d'une portion centrale principale de l'aile, ces mécanismes coopérant avec des nervures d'introduction d'efforts du volet espacées le long d'une direction longitudinale de bord d'attaque, et étant notamment dimensionnées pour maintenir le volet en position durant les différentes phases de vol, ainsi que pour assurer la transmission des efforts aérodynamiques vers cette portion centrale principale de l'aile.

Un tel volet mobile de bord d'attaque doit être conçu de manière à pouvoir résister à l'impact d'un oiseau survenant sur celui-ci en vol de croisière, au sol lors d'opérations de manoeuvre de l'aéronef, ou encore durant les phases de décollage et d'atterrissage. En d'autres termes, le volet doit être suffisamment résistant pour que la détérioration de ce dernier, engendrée lors de ce type d'impact, ne conduise qu'à des conséquences minimes et non-catastrophiques pour celui-ci, et plus généralement pour l'ensemble de l'aéronef.

A cet égard, il est indiqué qu'un impact d'oiseau sur le volet mobile de bord d'attaque est particulièrement néfaste et dangereux lorsque cet oiseau percute une zone frontale du revêtement aérodynamique du volet. Il est noté que cette zone frontale est également appelée « zone sensible aux impacts d'oiseaux », dans la mesure où elle correspondant à la zone la plus critique de ce revêtement aérodynamique en cas d'impact d'oiseau survenant sur ce dernier. Cette zone frontale du revêtement aérodynamique, relativement peu inclinée par rapport à la verticale et s'étendant de façon limitée vers le haut et éventuellement vers le bas depuis une jonction entre une portion extrados et une portion intrados du revêtement aérodynamique, est en effet qualifiée de sensible car lorsqu'elle est impactée par un oiseau, le choc produit une énergie très importante principalement transmise au volet. Bien entendu, cette énergie serait capable d'engendrer une détérioration considérable du volet si celui-ci n'était pas conçu suffisamment résistant, et pourrait également provoquer des conséquences désastreuses sur l'ensemble de l'aile. A titre indicatif, il est noté qu'un choc d'oiseau survenant au-dessus et en dessous de la zone frontale mentionnée précédemment, produira une énergie plus faible, non-susceptible de générer des effets destructeurs. Effectivement, un oiseau entrant en contact avec l'une des portions extrados et intrados, en dehors de la zone frontale, aura sa trajectoire déviée par la portion concernée, et les efforts dynamiques liés au choc et transmis au volet mobile seront alors sans conséquence catastrophique.

Au vu de ce qui précède, il est donc évident que les exigences susmentionnées conduisent inévitablement à concevoir des volets mobiles de conception complexe, dans le sens où l'espace utile pour amortir les chocs d'oiseaux est nécessairement limité, notamment par la présence d'un dispositif de protection contre le givre. De plus, la conception de tels volets mobiles conduit à un poids plus important, dans le sens où il est généralement procédé à l'épaississement de la zone frontale du revêtement aérodynamique pour pouvoir stopper l'oiseau.

Les volets mobiles doivent être réalisés pour supporter l'énergie d'un impact d'oiseau, qui est proportionnelle au carré de la vitesse de l'aéronef. Pour ce faire, on connaît de l'art antérieur des volets mobiles de bord d'attaque disposant de structures conçues pour limiter les effets destructeurs susceptibles d'être provoqués par un impact d'oiseau dans la zone frontale du revêtement aérodynamique, mais dont la complexité et/ou le poids engendre des inconvénients non-négligeables en termes de coût et de masse globale du volet. A titre illustratif, la masse du volet est souvent pénalisée par la présence d'un nombre important de nervures, qui se répartissent en nervures d'introduction d'efforts et en nervures de forme qui sont toutes solidarisées à la zone frontale du revêtement aérodynamique.

De façon générale, les nervures d'introduction d'efforts sont réputées nécessaires pour la transmission des efforts vers la portion centrale principale de l'aile, et également nécessaires à l'obtention d'une résistance globale satisfaisante. En revanche, les nervures de forme, qui pénalisent fortement la masse globale du volet mobile, sont certes également prévues pour assurer une résistance globale satisfaisante, mais surtout présentes pour autoriser un maintien de la forme du contour extérieur du volet mobile, durant les différentes phases de vol de l'aéronef.

Le document US-A-6 616 101, qui se rapporte à une configuration dans laquelle le bord d'attaque de l'aile principale n'est plus constitué par un volet mobile, mais est au contraire fixe par rapport à une portion centrale de cette aile, décrit un sous-ensemble de structure de bord d'attaque d'une aile, qui est notamment conçue pour résister à l'impact d'un oiseau en vol.

Dans ce document, une structure primaire rigide sans nervure comprend deux panneaux sandwichs supérieur et inférieur reliés par des longerons placés d'une part en diagonale à l'intérieur de la structure, et d'autre part sensiblement verticalement à proximité de la partie avant du bord d'attaque. Ce sous-ensemble est fixé continûment à l'arrière à un caisson central de l'aile, et à l'avant à un capotage aérodynamique formant au moins partiellement le bord d'attaque de cette aile.

Après un impact d'oiseau sur une zone frontale du capotage ayant conduit à la déformation et/ou à la rupture de celui-ci, c'est le longeron avant de la structure rigide primaire qui vient à être sollicité pour contribuer à absorber l'énergie du choc de l'oiseau. Ainsi, dans cette configuration, la transmission des efforts dynamiques après l'impact de l'oiseau est assurée de façon homogène et continue depuis le capotage et dans toute la structure primaire susmentionnée, jusqu'au caisson central de l'aile principale.

Cette solution de l'art antérieur ne pourrait en aucun cas être appliquée sur un volet mobile de bord d'attaque, dans la mesure où la mobilité de ce dernier ne permet pas de réaliser une continuité de structure telle que celle rencontrée ci-dessus, notamment à l'aide du caisson central de l'aile.

Le document FR 2 547 270 decrit toutes les caractéristiques du préambule de la revendication 1.

### EXPOSÉ DE L'INVENTION

L' invention a donc pour but de proposer un volet mobile de bord d'attaque d'une aile principale de la voilure d'un aéronef, comprenant notamment un revêtement aérodynamique présentant une zone frontale, ce volet remédiant au moins partiellement aux inconvénients mentionnés ci-dessus relatifs aux réalisations de l'art antérieur.

Pour ce faire, l'invention a pour objet un volet mobile de bord d'attaque d'une aile principale de la voilure d'un aéronef, ce volet comprenant un revêtement aérodynamique présentant une zone frontale, une portion extrados ainsi qu'une portion intrados, et comportant également une pluralité de nervures d'introduction d'efforts espacées le long d'une direction longitudinale de bord d'attaque. Selon l'invention, les nervures d'introduction d'efforts disposent chacune d'une partie supérieure et d'une partie inférieure respectivement solidaires desdites portions extrados et intrados du revêtement aérodynamique, et chacune de ces nervures présente également une partie avant espacée de la zone frontale du revêtement aérodynamique.

Avantageusement, le volet mobile selon l'invention intègre des nervures d'introduction d'efforts qui sont conçues et positionnées de manière à ce que lors d'un impact d'oiseau survenant sur la zone frontale du revêtement aérodynamique, celui-ci puisse se déformer de façon significative sans que ces nervures ne s'opposent à la déformation rencontrée. En effet, la partie avant de chaque nervure d'introduction d'efforts étant située à distance de la zone frontale du revêtement, ce revêtement est donc en mesure de se déformer librement dans de grandes proportions vers l'intérieur du volet.

De plus, si la libre déformation du revêtement aérodynamique est possible au droit de chacune des nervures d'introduction d'efforts comme cela vient d'être évoqué, il en est évidemment de même pour les déformations longitudinales du revêtement rencontrées entre deux nervures directement consécutives. De plus, il est avantageusement prévu qu'entre deux nervures d'introduction d'efforts quelconques directement consécutives dans la direction longitudinale, le revêtement aérodynamique puisse se déformer librement au-delà des parties avant de ces nervures. En d'autres termes, le volet mobile de bord d'attaque est conçu de manière à ce que le revêtement aérodynamique soit en mesure de se déformer jusqu'à pénétrer à l'intérieur d'un espace situé entre deux nervures directement consécutives, et ce sans rencontrer d'obstacle.

Ainsi, quelle que soit la localisation du point d'impact d'un oiseau sur la zone frontale du revêtement, ce dernier est alors capable de se déformer continûment dans de grandes proportions dans la direction longitudinale du bord d'attaque, ainsi que vers l'intérieur du volet mobile.

L'avantage associé à la possibilité d'obtenir une telle déformation sans entrer en contact avec les nervures d'introduction d'efforts, ni avec aucun autre élément constitutif de du volet mobile, est qu'une partie conséquente de l'énergie du choc est absorbée lors de la libre déformation du revêtement.

Suite à la déformation continue décrite ci-dessus, le revêtement déformé élastiquement et plastiquement finit par venir en appui contre la partie avant de ces nervures, à travers lesquelles peuvent alors transiter les efforts liés au choc. Ainsi, ces nervures peuvent contribuer à absorber une partie de l'énergie de choc restante, éventuellement en association avec une arrière-structure multicellulaire. Dans tous les cas, les efforts transitant par les nervures d'introduction d'efforts sont transmis à la portion centrale principale de l'aile, en passant par des moyens d'attache appartenant à ces mêmes nervures et permettant d'assurer la liaison entre le volet mobile et des mécanismes de déplacement de ce dernier.

De cette manière, dans la mesure où l'énergie cinétique transmise aux nervures d'introduction d'efforts est plus faible qu'auparavant, le dimensionnement global de ces nervures peut être réduit par rapport à celui rencontré dans les réalisations de l'art antérieur. A cet égard, il est noté que la masse de ces nervures est également fortement amoindrie du fait de l'absence de matière à l'avant de celles-ci, assurant l'espacement avec le revêtement aérodynamique.

Par ailleurs, un autre avantage lié à l'invention réside dans le fait que les nervures de forme rencontrées dans l'art antérieur peuvent être supprimées, celles-ci empêchant en effet clairement au revêtement aérodynamique de se déformer librement pour absorber une partie de l'énergie de choc. A ce titre, il est précisé qu'un dimensionnement adéquat du revêtement aérodynamique, notamment en ce qui concerne son épaisseur, lui permet de disposer d'une rigidité telle que la présence de nervures de forme n'est effectivement plus requise pour maintenir la forme de ce revêtement lors des différentes phases de vol de l'aéronef.

Au vu de ce qui précède, il est donc clair que le volet mobile de bord d'attaque est en mesure de présenter une conception simplifiée et allégée par rapport à celles rencontrées antérieurement, tout en étant capable de résister aux effets destructeurs pouvant être générés par l'impact d'un oiseau survenant sur la zone frontale. Ainsi, le volet mobile selon l'invention permet d'éviter les conséquences catastrophiques qu'un tel choc serait susceptible de provoquer.

A titre indicatif, il est noté que pour obtenir une absorption relativement importante de l'énergie de choc lors de la déformation du revêtement aérodynamique survenant suite à un impact d'oiseau, ce revêtement doit effectivement être capable de se déformer de façon continue sans rupture avant de venir en contact avec les nervures d'introduction d'efforts. Le revêtement sera donc de préférence réalisé dans un matériau ductile assurant un tel comportement, comme un matériau métallique, par exemple l'aluminium ou l'un de ses alliages. En outre, il pourrait aussi être utilisé un matériau du type « Glare », à savoir un laminé aluminium/tissu de verre. D'une façon plus générale, il est retenu un matériau ductile qui tolère de grandes déformations élastoplastiques avant rupture (plus de 5%).

Il est précisé en outre que l'utilisation de tels matériaux métalliques permet évidemment de remplir la fonction de résistance à l'érosion.

Par ailleurs, le cas de déformation exposé ci-dessus suppose que le choc de l'oiseau sur la zone frontale, rencontré en vol de croisière, au sol lors d'opérations de manoeuvre de l'aéronef ou encore durant les phases de décollage et d'atterrissage, est d'une intensité suffisamment importante pour provoquer une déformation du revêtement aérodynamique amenant celui-ci à entrer en contact avec la partie avant des nervures d'introduction d'efforts. Néanmoins, pour des chocs d'intensité moindre ne générant pas une déformation du revêtement aérodynamique suffisante pour que celui-ci entre en contact avec les nervures, par exemple lorsque l'aéronef évolue à vitesse faible, la transmission des efforts dynamiques liés au choc de l'oiseau ne cause bien entendu aucun problème.

Préférentiellement, le volet mobile de bord d'attaque comprend une arrière-structure multicellulaire située en contact et à l'arrière des nervures d'introduction d'effort.

Par conséquent, l'arrière-structure multicellulaire participe à la reprise des efforts créés lors d'un choc d'oiseau survenant sur le revêtement aérodynamique, et contribue donc à assurer une bonne transmission des efforts à travers les différents éléments constitutifs du volet mobile. Effectivement, durant toute la phase de déformation du revêtement aérodynamique et jusqu'au contact de ce dernier avec les parties avant des nervures d'introduction d'efforts, la rigidité intrinsèque de l'arrière structure multicellulaire permet une introduction des efforts dans chacune des nervures, ainsi que le passage de ces efforts vers les mécanismes de déplacement du volet mobile, et donc vers la portion centrale principale de l'aile.

Il est indiqué que l'arrière-structure multicellulaire, de préférence réalisée en matériaux composites, procure donc une rigidité supplémentaire au volet mobile, qui permet notamment de procurer à ce volet une résistance mécanique globale suffisante après l'impact d'un oiseau ayant conduit à la déformation du revêtement aérodynamique.

A ce titre, cette arrière-structure multicellulaire supporte de préférence continûment le revêtement aérodynamique, le dimensionnement de cette arrière-structure étant adapté pour autoriser de grandes déformations du revêtement aérodynamique.

De manière préférentielle, l'arrière-structure multicellulaire comporte une portion extrados assemblée à la portion extrados du revêtement aérodynamique, ainsi qu'un revêtement arrière constituant un revêtement arrière du volet et étant assemblé à une partie arrière de chacune des nervures d'introduction d'efforts. De plus, ce revêtement arrière s'étend jusqu'à un bord de fuite de la portion extrados de l'arrière-structure multicellulaire.

Plus précisément, la portion extrados de l'arrière-structure multicellulaire, assimilable à une portion de revêtement externe, est assemblée continûment à la portion extrados du revêtement aérodynamique, et s'étend jusqu'à un bord de fuite du bec du volet mobile de bord d'attaque. Par ailleurs, le revêtement arrière de l'arrière-structure, assimilable quant à lui à un revêtement externe intérieur de cette dernière, est assemblé continûment à la portion intrados du revêtement aérodynamique.

Dans un tel cas, on peut donc prévoir que les deux portions extrados, assemblées l'une à l'autre continûment sur toute l'envergure du volet de bord d'attaque, sont également assemblées sur la partie supérieure de chacune des nervures d'introduction d'efforts, les deux portions extrados étant par exemple disposées de façon à se chevaucher, tout en formant une surface extérieure aérodynamique continue.

L'arrière-structure multicellulaire peut comporter un ensemble de caissons situé entre le revêtement arrière et la portion extrados de l'arrière-structure multicellulaire, cet ensemble de caissons étant alors situé à l'arrière d'une partie arrière supérieure de chacune des nervures d'introduction d'efforts. Cette arrière-structure multicellulaire est dans ce cas préférentiellement réalisée d'un seul tenant par injection sous vide, (de l'anglais « Resin Transfer Molding »).

Une autre possibilité réside dans le fait de prévoir une âme en nid-d'abeilles située entre le revêtement arrière et la portion extrados de l'arrière-structure multicellulaire, cette âme en nid-d'abeilles pouvant alors être située en contact d'une partie arrière supérieure de chacune des nervures d'introduction d'efforts.

De préférence, le volet mobile de bord d'attaque comprend en outre un raidisseur inférieur s'étendant selon la direction longitudinale de bord d'attaque, ce raidisseur inférieur assurant un raccordement entre la portion intrados du revêtement aérodynamique, et le revêtement arrière de l'arrière-structure multicellulaire.

Ce raidisseur inférieur présente avantageusement une section transversale en forme de L, la partie arrière de chacune des nervures d'introduction d'efforts reposant sur la branche latérale du L, et la portion intrados du revêtement aérodynamique reposant sur la base du L. Dans cette configuration, la branche latérale du L est donc interposée entre la partie arrière de chacune des nervures d'introduction d'efforts, et le revêtement arrière de l'arrière-structure.

De manière analogue, le volet mobile peut aussi comprendre un raidisseur supérieur s'étendant selon la direction longitudinale de bord d'attaque, ce raidisseur supérieur étant au contact de la partie avant et de la partie supérieure de chacune des nervures d'introduction d'efforts. Ainsi, ce raidisseur supérieur appuyé et assemblé sur les nervures d'introduction d'efforts est capable d'assurer la jonction entre la portion extrados du revêtement aérodynamique, et la portion extrados de l'arrière-structure multicellulaire.

Préférentiellement, en section prise selon un plan quelconque orthogonal à la direction X, en considérant un point C correspondant à un point d'appui avant du revêtement sur le raidisseur supérieur, un point D correspondant à un point d'appui avant du revêtement sur la partie inférieure de chaque nervure d'introduction d'efforts, un segment de droite CD et un milieu E de celui-ci, une droite d passant par ce milieu E et étant parallèle à une corde de l'élément de voilure, un point F représentant un point d'intersection entre la droite d et la zone frontale, un point G correspondant à un point d'intersection entre cette droite d et la partie avant de la nervure, une distance X1 correspondant à la longueur d'un segment de droite FG, et une distance X2 correspondant à la longueur d'un segment de droite EF, le volet mobile de bord d'attaque est alors conçu de telle sorte que la distance X1 soit comprise entre une fois et demi et deux fois la longueur X2.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un aéronef ;
- la figure 1A représente une vue schématique et partielle en coupe d'une aile principale de voilure d'aéronef munie d'un volet mobile de bord d'attaque selon l'invention ;
- la figure 2 représente une vue en perspective partiellement éclatée d'un volet mobile de bord d'attaque d'une aile principale de voilure d'aéronef, selon un premier mode de réalisation préféré de la présente invention ;
- la figure 3 est une vue en coupe transversale prise selon le plan P de la figure 2, ce plan P étant orthogonal à la direction longitudinale de bord d'attaque, et choisi de façon quelconque entre deux nervures directement consécutives ;
- la figure 4 représente une vue en coupe transversale d'un volet mobile de bord d'attaque d'une aile principale de voilure d'aéronef, selon un second mode de réalisation préféré de la présente invention ;
- la figure 5 représente une vue en coupe transversale d'un volet mobile de bord d'attaque d'une aile principale de voilure d'aéronef, selon un troisième mode de réalisation préféré de la présente invention ;
- la figure 6 représente une vue en coupe transversale d'un volet mobile de bord d'attaque d'une aile principale de voilure d'aéronef, selon un quatrième mode de réalisation préféré de la présente invention ; et
- la figure 7 est une vue en coupe prise le long de la ligne VII-VII de la figure 6.

### EXPOSÉ DÉTAILLÉ DE MODES DE RÉALISATION PRÉFÉRÉS

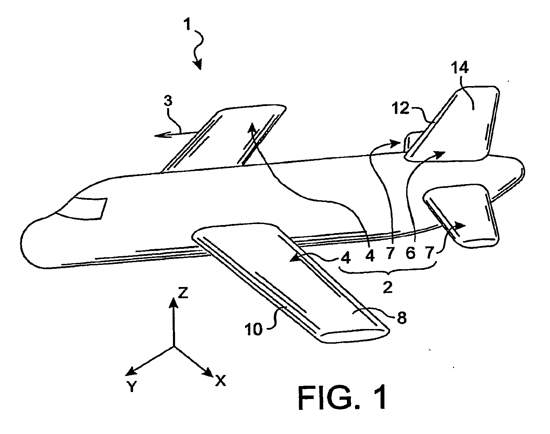

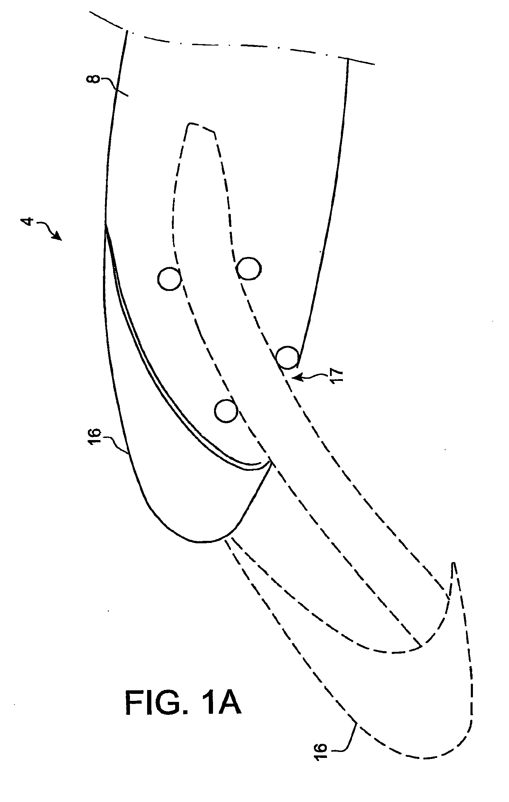

En référence à la figure 1, on voit un aéronef 1 disposant d'une voilure 2 constituée d'une pluralité d'éléments de voilure, encore appelés surfaces aérodynamiques portantes.

Dans toute la description qui va suivre, les termes « avant » et « arrière » sont à considérer par rapport à une direction d'avancement de l'aéronef rencontrée suite à la poussée exercée par les moteurs de l'aéronef, cette direction étant représentée schématiquement par la flèche 3.

Parmi les éléments de voilure de l'aéronef 1, on compte deux ailes principales 4, une dérive verticale 6 ainsi que deux empennages horizontaux 7 situés à l'arrière de cet aéronef. Chacune des deux ailes principales 4 est susceptible d'être équipée d'au moins un volet mobile de bord d'attaque selon l'invention, comme cela sera exposé de façon détaillée ci-dessous pour l'une des deux ailes principales 4.

A ce titre, en ce qui concerne les ailes principales 4, celles-ci comprennent chacune une portion centrale principale 8 constituant quasiment l'intégralité de l'aile, et étant située en arrière d'un bord d'attaque 10. Ici encore, dans toute la description qui va suivre, par convention, on appelle X la direction longitudinale de bord d'attaque, Y la direction orientée transversalement par rapport au bord d'attaque 10 de l'aile 4, et Z la direction verticale, ces trois directions étant orthogonales entre-elles.

Ainsi, comme le montre la figure 1A, c'est effectivement le bord d'attaque de chacune des deux ailes principales 4 qui peut être réalisé à l'aide d'au moins un volet mobile de bord d'attaque 16 objet de la présente invention, et dont quatre modes de réalisation préférés vont être décrits ci-après. Sur cette figure 1A, on peut en effet voir que le volet mobile de bord d'attaque 16, représenté uniquement schématiquement, peut occuper une position rétractée/rentrée dans laquelle il épouse la partie avant de la portion centrale principale 8 de l'aile 4, comme cela est montré en traits pleins. De plus, les traits en pointillés représentent le volet mobile 16 dans sa position entièrement déployée où il est à distance de la portion centrale principale 8, cette position déployée étant adoptée durant les phases d'atterrissage et de décollage afin d'augmenter la portance à faible ou moyenne vitesse. Il est noté que pour passer de l'une à l'autre des deux positions extrêmes représentées, l'aile 4 comporte des mécanismes de déplacement 17 intégrés dans la partie avant de la portion centrale principale 8, ces mécanismes 17 étant bien connus de l'homme du métier et comprenant habituellement des rails.

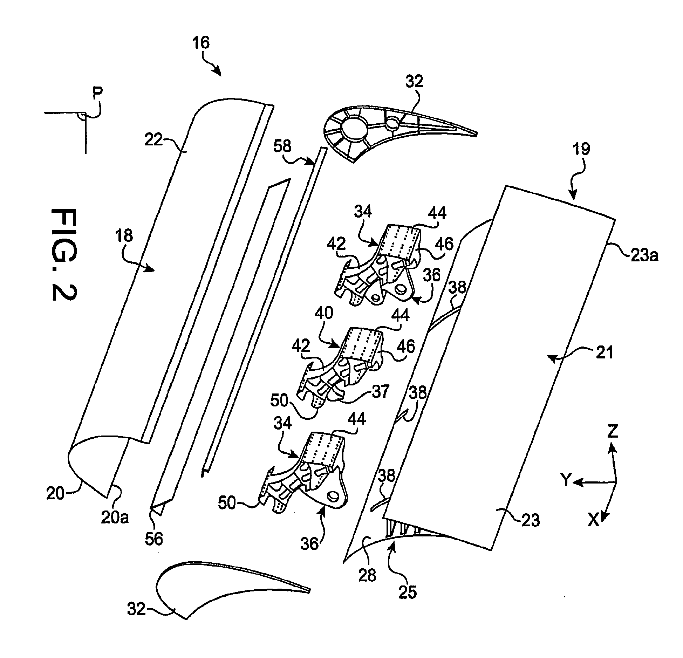

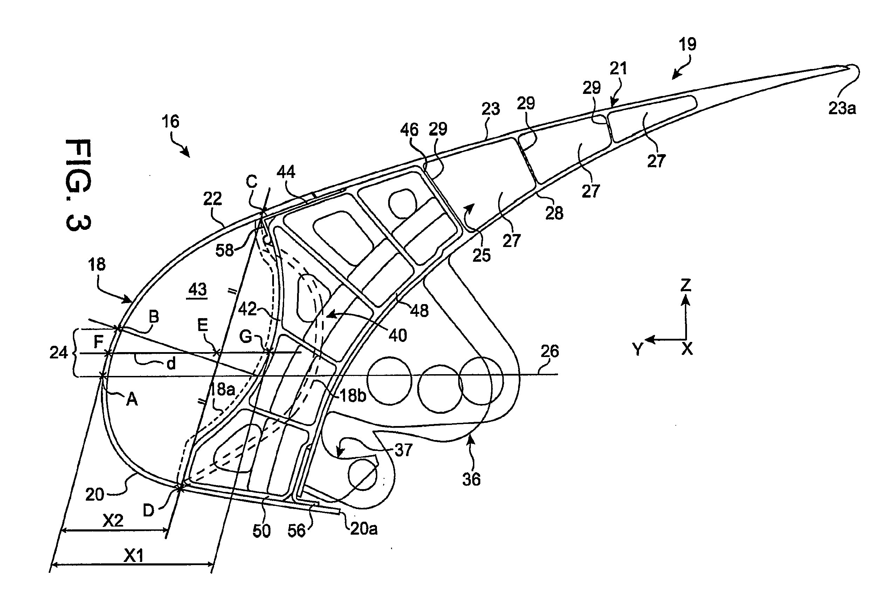

En référence tout d'abord conjointement aux figures 2 et 3, on voit un volet mobile de bord d'attaque 16 selon un premier mode de réalisation préféré de la présente invention. Le volet mobile 16 s'étend par exemple sur sensiblement toute la longueur de l'aile 4 concernée, bien entendu selon la direction longitudinale de bord d'attaque X, assimilable à une direction d'envergure de cette aile 4. Pour des raisons évidentes de clarté des figures 2 et 3, la portion centrale principale 8 de l'aile 4 n'a pas été représentée, mais elle peut naturellement être réalisée selon toute configuration connue de l'homme du métier.

Le volet mobile de bord d'attaque 16 comporte un revêtement aérodynamique 18, éventuellement réalisé à l'aide de plusieurs éléments solidarisés et s'étendant selon la direction X, et définissant une portion intrados 20 ainsi qu'une portion extrados 22. De plus, comme cela est indiqué sur la figure 3, le revêtement 18 présente une zone frontale sensible aux impacts d'oiseaux 24, cette zone 24 étant telle que décrite dans la partie état de la technique antérieure. Plus précisément mais toujours à titre indicatif, elle s'étend entre un point A correspondant au point le plus avant du revêtement 18 en phase de croisière lorsque le volet 16 est intégralement rentré (tel que représenté sur cette figure 3), et un point B correspondant au point le plus avant du revêtement 18 en phase d'atterrissage lorsque le volet 16 est intégralement déployé.

En outre, il est noté que le point A se situe sur une corde géométrique 26 de l'aile principale 4, tandis que le point B se situe sur la portion extrados 22.

Il est noté que la « corde géométrique 26 » est à comprendre comme étant le segment de droite reliant le point le plus avant et le point le plus arrière de la section de cette aile principale 4, cette section étant prise selon un plan quelconque orthogonal à la direction X. En d'autres termes et dans le cas précis d'une aile principale 4, la corde 26 est le segment de droite reliant un point (le point A) établissant la jonction avant entre l'intrados et l'extrados de l'aile et un point (non représenté) établissant la jonction arrière entre ces mêmes intrados et extrados, toujours dans une section quelconque de l'aile 4 prise selon un plan YZ.

Comme cela sera exposé plus en détail ci-dessous, le volet 16 du premier mode de réalisation préféré présente une partie arrière 19 qui est entièrement constituée par une structure multicellulaire 21. Cette structure multicellulaire 21 présente une portion extrados 23, ainsi qu'un revêtement arrière 28 qui se prolonge vers l'arrière jusqu'à un bord de fuite 23a de la portion extrados 23.

Le revêtement arrière 28 de l'arrière-structure 21 est donc prévu pour fermer la partie arrière du volet 16, puisqu'il s'étend également jusqu'au niveau de la portion intrados 20 du revêtement 18, à proximité d'un bord de fuite 20a de celui-ci, comme cela sera décrit ultérieurement. Il est précisé que le revêtement arrière 28, s'étendant tout le long du volet 16 selon la direction X, dispose de façon connue d'une courbure vers l'avant lui permettant d'épouser une partie de géométrie complémentaire appartenant à la portion centrale principale de l'aile 4, et de glisser sur celle-ci.

Dans les modes de réalisation préférés représentés sur les figures, la portion extrados 23 de l'arrière-structure multicellulaire 21 s'arrête juste à proximité d'un bord de fuite de cette dernière, toujours de manière à ce que ces deux portions 22, 23 définissent conjointement une surface extérieure aérodynamique sensiblement continue. Ici, la jonction mécanique entre les deux portions extrados 22, 23 est alors réalisée à l'aide d'un doubleur sur lequel elles sont chacune assemblées, comme cela sera exposé de façon plus détaillée ci-après.

A cet égard, il est noté que la portion extrados 23 de l'arrière-structure multicellulaire 21 pourrait également s'étendre vers l'avant jusqu'à venir chevaucher la portion extrados 22 du revêtement 18 à laquelle cette portion 23 est fixée, par exemple à l'aide de moyens d'assemblage classiques du type rivet. Bien entendu, dans une telle configuration, les deux portions extrados 22, 23 formant conjointement l'ensemble de l'extrados du volet 16, se chevauchent de manière à définir une surface extérieure aérodynamique continue. De plus, elles s'étendent également tout le long du volet 16, selon la direction X.

Le revêtement arrière 28 et la portion extrados 23 sont solidarisés à deux nervures d'extrémité 32 fermant de part et d'autre l'espace délimité par ces mêmes éléments 23, 28 ainsi que par le revêtement 18, à l'aide de moyens conventionnels et connus de l'homme du métier.

L'arrière-structure multicellulaire 21 comporte également un ensemble de caissons 25 situé entre le revêtement arrière 28 et la portion extrados 23. Plus précisément, dans ce premier mode de réalisation préféré, l'ensemble de caissons 25 présente une pluralité de caissons 27 qui s'étendent chacun selon la direction X, de préférence tout le long du volet 16. Chaque caisson 27 est délimité vers le haut par la portion extrados 23, vers le bas par le revêtement 28, et vers l'avant et l'arrière par des voiles 29. Dans l'exemple montré sur les figures 2 et 3, ce sont trois caissons 27 qui se succèdent de l'avant vers l'arrière, le caisson 27 situé le plus à l'arrière étant proche du bord de fuite 23a. Naturellement, le nombre de caissons 27 peut être adapté en fonction des besoins rencontrés.

Comme on peut clairement l'apercevoir sur la figure 2, il est noté que la portion extrados 23 et le revêtement arrière 28, qui disposent chacun d'une partie arrière participant à la définition des caissons 27, présentent également chacun une partie avant qui s'étend vers l'avant par rapport à l'ensemble de caissons 25. En d'autres termes, les caissons 27 ne se trouvent qu'à l'arrière de l'arrière-structure 21. De plus, comme cela sera exposé en détail ultérieurement, il est noté que les parties avant des éléments 23, 28 permettent de réaliser des raccordements entre l'arrière-structure multicellulaire 21 et les autres éléments constitutifs du volet 16, tel que le raccordement entre les portions extrados 22 et 23 qui a été exposé ci-dessus.

La totalité de l'arrière-structure multicellulaire 21 est de préférence réalisée d'une seule pièce en matériaux composites à base de fibres de carbone, moulée à l'aide de la technique d'injection sous vide, dite technique de RTM (de l'anglais « Resin Transfer Molding »). Cette technique consiste à placer une armature en carbone dans un moule, où elle est imprégnée d'une résine synthétique sous pression et à haute température. Cette technique est avantageuse en ce sens qu'elle permet d'obtenir la forme complète de l'arrière-structure multicellulaire 21, dans un temps de fabrication réduit.

Alternativement, il est également possible de fabriquer l'arrière-structure multicellulaire 21 en réalisant séparément deux peaux de trames en carbone imprégnées en résine synthétique ainsi que des voiles longitudinaux de même nature, puis de procéder à l'assemblage de ces divers éléments, par exemple par une technique de collage connue de l'homme du métier. Parmi ces différentes techniques, on compte celle du collage de composites en matériaux pré-imprégnés, ou encore celle de soudure de composites à résine thermoplastique.

En référence plus précisément à la figure 2, le volet 16 comporte une pluralité de nervures d'introduction d'efforts 34, 40 espacées le long de la direction X, et donc situées entre les nervures d'extrémité 32. Les nervures 34, 40 sont de préférence toutes orientées verticalement selon la direction transversale Y, à savoir selon un plan YZ. De plus, elles sont de préférence aussi réalisées selon la technique de RTM, décrite ci-dessus.

A titre d'exemple indicatif, il est prévu deux nervures d'introduction d'efforts 34 munies de moyens d'attache 36 permettant d'assurer la liaison entre le volet 16, et les mécanismes de déplacement de ce dernier solidarisés à la portion centrale principale 8 de l'aile 4. Ainsi, des passages 38 sont pratiqués sur le revêtement arrière 28, afin que les moyens d'attache 36 puissent traverser celui-ci. D'autre part, une nervure d'introduction d'efforts intermédiaire 40 est interposée entre les deux nervures 34, dans le but d'accroître la rigidité du volet 16, et plus spécifiquement d'imposer à ce dernier, lorsque celui-ci est en position rétractée/rentrée, la même déformée que l'ensemble de l'aile principale 4. Toujours dans cette position rétractée/rentrée, la nervure d'introduction d'efforts intermédiaire 40 permet donc effectivement, au même titre que les autres nervures d'introduction 34, de transmettre des efforts à la portion centrale principale 8 de l'aile 4.

De préférence, cette nervure intermédiaire 40 diffère des nervures 34 uniquement par le fait qu'elle ne porte pas de moyens d'attache 36, mais un simple crochet 37 destiné à coopérer avec la portion centrale principale 8, en prenant appui sur celle-ci. Bien entendu, si le nombre de nervures d'introduction d'efforts 34, 40 est fixé à trois dans l'exemple représenté, ce nombre de nervures peut être adapté en fonction des conditions requises quant au support du volet mobile de bord d'attaque. De plus, ces nervures 34, 40 assemblées sur l'arrière-structure multicellulaire 21 sont prévues pour que les efforts résultant d'un impact d'oiseau et qui sollicitent cette arrière-structure 21 puissent transiter vers les mécanismes de déplacement du volet 16.

En résumé, dans ce premier mode de réalisation préféré ainsi que dans les suivants, le volet mobile ne comporte au total que cinq nervures transversales, dont trois nervures d'introduction d'efforts 34, 40 autorisant la déformation du revêtement aérodynamique 18 lors d'un impact d'oiseau comme cela sera exposé ci-après, et dont deux nervures d'extrémité 32.

Chacune des nervures d'introduction d'efforts 34, 40 comporte cinq parties distinctes, raccordées les unes aux autres. En effet, comme on peut le voir sur la nervure 40 de la figure 3, celle-ci comporte successivement dans le sens horaire, une partie ou surface avant 42, une partie ou surface supérieure 44, une partie ou surface arrière supérieure 46, une partie ou surface arrière 48, et enfin une partie ou surface inférieure 50. Par la suite, la coopération entre ces différentes parties et les autres éléments constitutifs du volet 16 va être décrite en référence à la nervure 40, mais il est à comprendre qu'elle est la même pour chacune des nervures d'introduction d'efforts 34, 40.

En ce qui concerne la partie avant 42 de la nervure 40, il est noté que celle-ci est située en regard et à distance de la zone frontale 24 du revêtement aérodynamique 18, comme cela est clairement montré sur la figure 3.

Ainsi, lors d'un impact d'oiseau survenant sur la zone frontale 24, le revêtement 18 est donc en mesure de se déformer librement vers l'intérieur du volet 16, dans un espace non occupé 43 délimité vers l'arrière, au droit de la nervure 40, par la partie avant 42 de celle-ci. Il est par conséquent possible d'obtenir une déformation du revêtement 18 sans que celui-ci entre en contact avec les nervures d'introduction d'efforts 34, 40, ni avec aucun autre élément constitutif du volet mobile 16. De cette manière, une partie conséquente de l'énergie du choc peut avantageusement être absorbée lors de la libre déformation de ce revêtement 18, avant que l'énergie de choc restante soit transmise aux nervures 34, 40 et à l'arrière-structure multicellulaire 21, puis dans un second temps à la portion centrale principale 8 de l'aile 4 par l'intermédiaire des moyens d'attache 36.

Dans ce premier mode de réalisation préféré de la présente invention, la partie avant 42 est munie d'une échancrure en regard de la zone frontale 24 et ayant une surface de courbure inversée par rapport à celle de cette zone frontale 24, à savoir présentant une courbure vers l'arrière. Cette échancrure s'étend sur sensiblement toute la partie avant 42, et permet donc au revêtement 18 de voir sa courbure s'inverser lors de la déformation, avant de venir en contact avec la partie avant 42, comme cela est montré par les pointillés 18a de la figure 3. Naturellement, l'échancrure pratiquée permet d'élargir vers l'arrière l'espace libre 43 dans lequel le revêtement 18 est susceptible de se déformer librement, et autorise par conséquent une plus grande déformation de ce revêtement 18. A cet égard, si les pointillés 18a de la figure 3 représentent le revêtement 18 déformé au droit d'une nervure d'introduction d'efforts 34, 40, il est à comprendre que ce revêtement 18 peut se déformer encore davantage vers l'arrière entre deux nervures directement consécutives, dans la mesure où l'espace 43 n'est alors plus limité vers l'arrière par les parties avant 42, mais se prolonge jusqu'à l'ensemble de caissons 25. Ainsi, les pointillés 18b de cette figure 3 représentent schématiquement le revêtement 18 déformé entre deux nervures directement consécutives dans la direction X.

La partie supérieure 44 de la nervure 40 permet de servir de support pour les portions extrados 22, 23, qui y sont fixées, par des moyens classiques connus de l'homme du métier. De plus, il est noté que c'est au niveau de cette partie supérieure 44 que s'effectue la jonction entre les deux portions extrados 22, 23.

La partie arrière supérieure 46 de la nervure 40 est située en regard du voile avant 29 du caisson le plus avant 27, et éventuellement en contact avec ce même voile 29 de façon à assurer une meilleure transmission des efforts entre la nervure 40 et l'arrière-structure multicellulaire 21.

Toujours en référence à la figure 3, la partie arrière 48 épouse la partie du revêtement arrière 28 qui ne sert pas directement à la formation des caissons 27, c'est-à-dire la partie avant de ce revêtement. D'autre part, la partie arrière 48 et le revêtement arrière 28, qui disposent donc chacun d'une courbure vers l'avant, sont assemblés par des moyens de fixation classiques connus de l'homme du métier.

De plus, c'est cette partie arrière 48 qui porte les moyens d'attache 36 ou le crochet 37 décrits précédemment.

Enfin, les parties inférieures 50 des nervures d'introduction d'efforts 34, 40 sont reliées entre elles par un raidisseur inférieur 56 s'étendant selon la direction X, tout le long du volet 16. Ce raidisseur 56, de préférence réalisé en aluminium ou dans l'un de ses alliages, présente une section transversale en forme de L dont la branche latérale dispose d'une face avant en contact avec les parties arrière 48 des nervures d'introduction d'efforts 34, 40, et d'une face arrière en contact avec le revêtement arrière 28 de l'arrière-structure 21. Une alternative pourrait également consister à prévoir que les éléments 28 et 56 soient réalisés d'une seule pièce, ce qui procure naturellement un gain de performance par réduction du poids et du nombre de connexions.

En outre, la base du L est quant à elle en contact, au niveau d'une face inférieure, avec la portion intrados 20 du revêtement 18, à proximité du bord de fuite 20a de ce dernier.

Par conséquent, comme on peut le voir sur la figure 3, le raidisseur inférieur 56 assure la jonction mécanique entre la portion intrados 20 du revêtement 18 et une portion inférieure du revêtement arrière 28, auxquels il est fixé par l'intermédiaire de moyens classiques connus de l'homme du métier. Naturellement, les moyens de fixation permettant l'assemblage de la portion inférieure du revêtement arrière 28 sur la branche latérale du L assurent également la fixation de cette même branche latérale sur les parties arrière 48 des nervures 34, 40.

De manière analogue, il est prévu un raidisseur supérieur 58, de préférence réalisé en matériau composite, qui s'étend également selon la direction X, tout le long du volet 16. A titre illustratif, le raidisseur 58 dispose d'une section transversale en forme de L.

Le raidisseur supérieur 58 est assemblé par des moyens classiques du type rivet aux nervures d'introduction d'efforts 34, 40. De façon plus précise, la branche latérale du L est assemblée sur les parties supérieures 44 des nervures 34, 40, tandis que la base de ce L est quant à elle fixée sur les parties avant 42 de ces mêmes nervures 34, 40. Par conséquent, le raidisseur supérieur 58 se situe donc au contact d'une portion avant supérieure de chacune des nervures d'introduction d'efforts 34, 40.

En outre, la face supérieure de la branche latérale du L, opposée à celle en contact avec les nervures 34, 40, constitue une bande support sur laquelle reposent et sont fixées chacune des deux portions extrados 22, 23, comme cela est clairement visible sur la figure 3. De cette façon, le raidisseur supérieur 58 joue alors le rôle de « doubleur » évoqué précédemment, sur lequel sont montées fixement chacune des deux portions extrados 22, 23, par exemple par rivetage et/ou collage.

A titre indicatif, le raidisseur supérieur 58 est de préférence réalisé en matériau composite, formé par exemple d'une fibre de carbone et d'une résine synthétique.

Outre la fonction d'augmentation de la résistance mécanique globale du volet 16 remplie par les raidisseurs 56, 58 fixés aux nervures d'extrémité 32, il est noté que le raidisseur supérieur 58 permet également de définir la partie du revêtement 18 susceptible d'être déformée lors d'un impact d'oiseau sur la zone frontale 24. Au niveau inférieur du volet, cette fonction est assurée par la jonction entre la partie avant 42 et la partie inférieure 50 des nervures d'introduction d'efforts 34, 40.

En effet, comme cela est représenté en pointillés sur la figure 3, on peut se rendre compte que c'est uniquement la partie du revêtement 18 située à l'avant par rapport au raidisseur supérieur 58 et par rapport à la jonction précitée, qui se déforme suite à l'impact d'un oiseau, pour venir à l'intérieur de l'espace 43, et éventuellement épouser l'échancrure de la partie avant 42 des nervures 34, 40. En d'autres termes, la jonction entre les parties avant 42 et les parties inférieures 50 d'une part, et le raidisseur supérieur 58 d'autre part, constituent respectivement des bordures longitudinales inférieure et supérieure d'une ouverture permettant au revêtement 18 de se déformer vers l'intérieur du volet 16.

A ce titre et comme mentionné précédemment, pour obtenir une absorption satisfaisante de l'énergie de choc lors de la déformation du revêtement 18, ce revêtement 18 doit être capable de se déformer de façon continue sans rupture avant de voir sa courbure s'inverser puis éventuellement venir en contact avec les nervures d'introduction d'efforts 34, 40. Pour ce faire, le revêtement sera donc de préférence réalisé dans un matériau ductile assurant un tel comportement, comme un matériau métallique, par exemple l'aluminium ou l'un de ses alliages. Cependant, il pourrait aussi être employé un matériau du type « Glare », à savoir un laminé aluminium/tissu de verre.

Toujours en référence à la figure 3, le point C correspond au point d'appui avant du revêtement 18 sur le raidisseur supérieur 58, et le point D correspond au point d'appui avant du revêtement 18 sur la partie inférieure 50 de chacune des nervures d'introduction d'efforts 34, 40. En considérant le segment de droite CD et un milieu E de celui-ci, il est représenté une droite d passant par ce milieu E et étant parallèle à la corde 26, le point F représentant le point d'intersection entre la droite d et la zone frontale 24, et le point G représentant le point d'intersection entre cette droite d et la partie avant 42 de la nervure 40. De plus, on note X1 la longueur du segment de droite FG correspondant à une profondeur de dégagement, et X2 la longueur du segment de droite EF.

A cet égard, des essais ont permis de mettre en évidence que l'échancrure de forme courbe, prévue de façon identique sur la partie avant 42 de toutes les nervures d'introduction d'efforts 34, 40, était particulièrement intéressante lorsqu'elle assurait une profondeur de dégagement X1 comprise entre une fois et demi et deux fois la longueur X2.

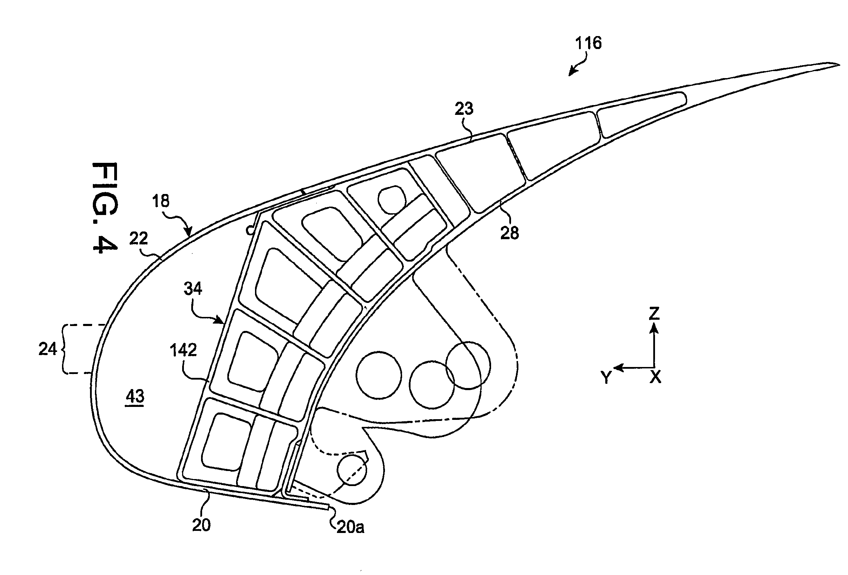

En référence maintenant aux figures 4 à 7, on voit des volets mobiles de bord d'attaque 116, 216, 316 selon respectivement des second, troisième et quatrième modes de réalisation préférés de la présente invention. Ces volets 116, 216, 316 s'étendent également par exemple sur sensiblement toute la longueur de l'aile 4 concernée, selon la direction longitudinale de bord d'attaque X.

Ces trois modes de réalisation préférés sont similaires au premier mode de réalisation préféré qui vient d'être décrit. Par conséquent, sur les figures, les éléments portant les mêmes références numériques correspondent à des éléments identiques ou similaires.

En référence tout d'abord à la figure 4, représentant le volet 116 selon le second mode de réalisation préféré de la présente invention, seule la forme des nervures d'introduction d'efforts 34, 40 diffère par rapport à celle divulguée dans le premier mode de réalisation préféré.

Effectivement, les nervures 34, 40 disposent d'une partie avant 142 qui prend la forme d'une surface non plus courbe, mais sensiblement plane et qui s'étend parallèlement à la direction X. Comme cela est visible sur la figure 4, la surface susmentionnée s'étend vers le haut en allant vers l'arrière. A ce titre, bien qu'elle ne présente pas d'échancrure, il est noté que la partie avant 142 est tout de même située suffisamment à distance de la zone frontale 24, pour permettre une absorption significative de l'énergie de choc lors de la déformation du revêtement 18. Par ailleurs, il est noté que la suppression de l'échancrure offre une rigidité accrue par rapport à celle présentée par les nervures d'introduction d'efforts du premier mode de réalisation préféré.

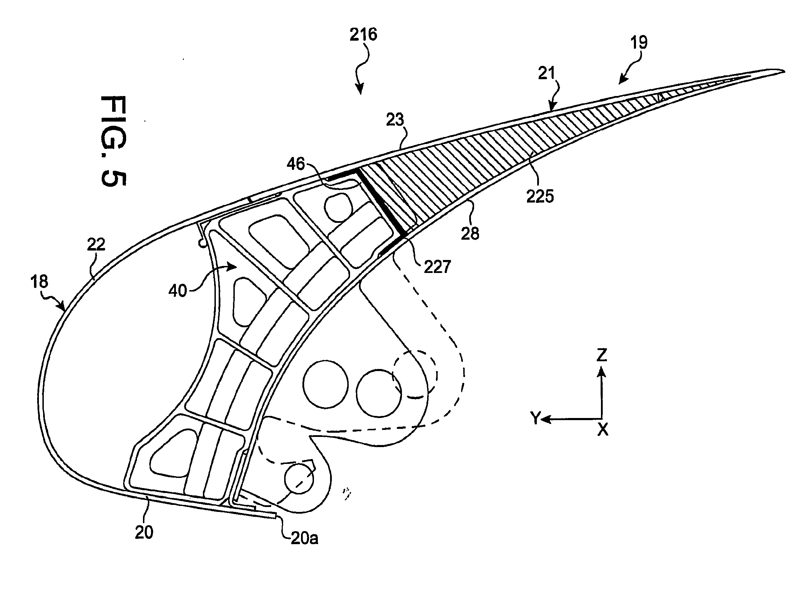

En référence à présent à la figure 5, il est représenté le volet 216 selon le troisième mode de réalisation préféré de la présente invention. Seule l'arrière-structure multicellulaire 21 prévue au niveau de la partie arrière 19 du volet 216 diffère par rapport à celle divulguée dans le premier mode de réalisation préféré.

En effet, l'arrière-structure multicellulaire 21 présente une portion extrados 23 et un revêtement arrière 28 identiques ou similaires à ceux décrits pour le volet 16, mais l'ensemble de caissons 25 est remplacé par une âme en nid-d'abeilles 225, réalisée par exemple en matériau synthétique. De cette façon, la portion 23 et le revêtement 28, réalisés de préférence de trames en carbone imprégnées en résine synthétique, constituent conjointement avec l'âme 225 une structure du type sandwich qui permet d'accroître la rigidité de la partie arrière 19 du volet 216, et de diminuer sensiblement la masse globale de ce dernier. Il est noté que ce troisième mode de réalisation préféré de la présente invention est particulièrement avantageux pour des volets de grande envergure.

Dans ce troisième mode de réalisation préféré, l'avant de l'âme en nid-d'abeilles 225 peut avantageusement être en contact plan avec la partie arrière supérieure 46 de chacune des nervures d'introduction d'efforts 34, 40. Comme on peut le voir sur la figure 5, il est possible d'interposer une armature 227 entre la partie arrière supérieure 46 de chacune des nervures 34, 40, et l'âme en nid-d'abeilles 225. Dans cette configuration, l'armature 227 s'étend alors selon la direction X sur toute l'envergure du volet 216.

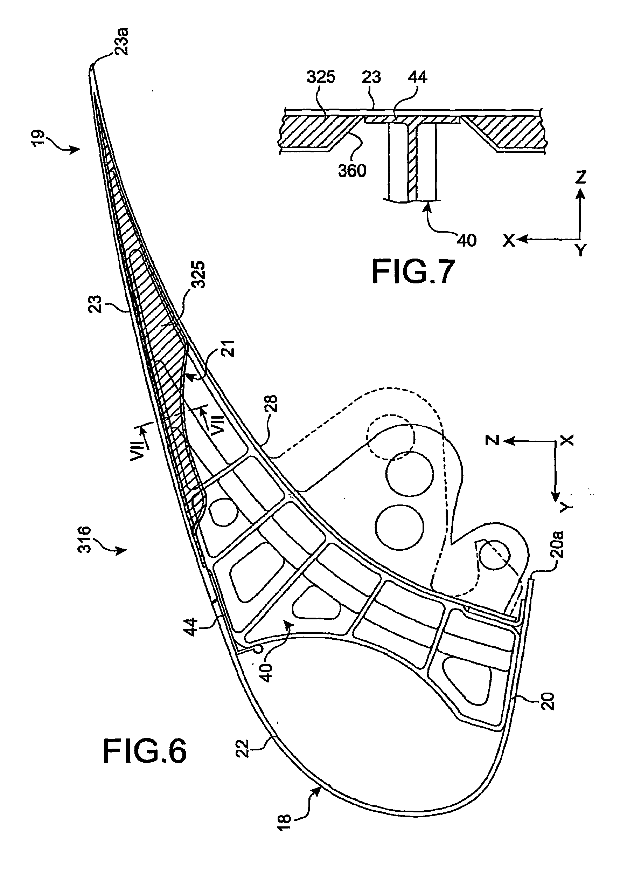

En référence aux figures 6 et 7, il est représenté le volet 316 selon le quatrième mode de réalisation préféré de la présente invention. Seules l'arrière-structure multicellulaire 21 prévue au niveau de la partie arrière 19 du volet 316 et la forme des nervures d'introduction d'efforts 34, 40 diffèrent par rapport à celles divulguées dans le troisième mode de réalisation préféré.

Effectivement, il est prévu une âme en nid-d'abeilles 325 située entre la portion extrados 23 et le revêtement arrière 28, et qui a la particularité de présenter des passages 360 orientés selon la direction transversale Y et espacés selon la direction X, comme cela se voit sur la figure 7 (un seul passage 360 étant représenté sur cette figure). Chaque passage 360 permet à une nervure 34, 40 associée de se prolonger vers l'arrière du volet 316 à travers cette même âme 325, par exemple jusqu'à proximité du bord de fuite 23a. De la même manière, l'âme 325 peut aussi être prolongée vers l'avant par rapport à la solution du troisième mode de réalisation préféré. A ce titre, comme on peut le voir sur la figure 6, une partie supérieure de l'âme en nid-d'abeilles 325 s'étend par exemple jusqu'à proximité de la jonction entre les parties extrados 22, 23. Dans un tel cas, en raison du faible nombre de nervures 34, 40 requis, et donc du faible nombre de passages 360 associés, l'âme 325 couvre la majeure partie de la portion extrados 23 de l'arrière-structure multicellulaire 21.

Ce quatrième mode de réalisation préféré offre l'avantage de combiner la rigidité intrinsèque d'une structure du type sandwich, avec la présence de nervures d'introduction d'efforts de grandes dimensions, capables d'introduire des efforts dynamiques importants comparativement aux nervures des deux premiers modes de réalisation préférés. A titre indicatif, cette combinaison permet non seulement d'optimiser la résistance et la masse globale d'un volet de grande dimension, mais autorise également l'élargissement de la profondeur de l'échancrure prévue sur la partie avant 42 de chacune des nervures d'introduction d'efforts 34, 40.

Bien entendu, diverses modifications peuvent être apportées par l'homme du métier aux volets mobiles de bord d'attaque 16, 116, 216, 316 qui viennent d'être décrits, uniquement à titre d'exemples non limitatifs. A cet égard, il est noté que les volets mobiles qui viennent d'être décrits font référence à des volets du type « slat » susceptibles d'être déployés à l'aide de rails, mais que l'invention s'applique également à tout autre volet mobile, tel que ceux du type « drop nose » qui sont simplement articulés sur la portion centrale principale de l'aile.

## Revendications

1. Volet mobile de bord d'attaque (16, 116, 216, 316) d'une aile principale de la voilure d'un aéronef, ledit volet comprenant un revêtement aérodynamique (18) présentant une zone frontale (24), une portion extrados (22) ainsi qu'une portion intrados (20), ledit volet comportant également une pluralité de nervures d'introduction d'efforts (34, 40) espacées le long d'une direction longitudinale de bord d'attaque (X), disposant chacune d'une partie supérieure (44) et d'une partie inférieure (50) respectivement solidaires desdites portions extrados et intrados (22, 20) du revêtement aérodynamique (18), **caractérisé en ce que** chacune de ces nervures (34, 40) présente également une partie avant (42, 142) espacée de ladite zone frontale (24) du revêtement aérodynamique (18).

2. Volet mobile de bord d'attaque (16, 116, 216, 316) selon la revendication 1, **caractérisé en ce qu'**il comprend une arrière-structure multicellulaire (21) située en contact et à l'arrière desdites nervures d'introduction d'efforts (34, 40).

3. Volet mobile de bord d'attaque (16, 116, 216, 316) selon la revendication 2, **caractérisé en ce que** l'arrière-structure multicellulaire (21) comporte une portion extrados (23) assemblée à ladite portion extrados (22) du revêtement aérodynamique (18), ainsi qu'un revêtement arrière (28) constituant un revêtement arrière du volet et étant assemblé à une partie arrière (48) de chacune des nervures d'introduction d'efforts (34, 40), ledit revêtement arrière (28) s'étendant jusqu'à un bord de fuite (20a) de la portion extrados (20) de l'arrière-structure multicellulaire (21).

4. Volet mobile de bord d'attaque (16, 116, 216, 316) selon la revendication 3, **caractérisé en ce que** les deux portions extrados (22, 23) sont assemblées sur la partie supérieure (44) de chacune des nervures d'introduction d'efforts (34, 40).

5. Volet mobile de bord d'attaque (16, 116) selon la revendication 3 ou la revendication 4, **caractérisé en ce que** l'arrière-structure multicellulaire (21) comporte également un ensemble de caissons (25) situé entre lesdits revêtement arrière (28) et la portion extrados (23) de ladite structure multicellulaire (21), ledit ensemble de caissons (25) étant situé à l'arrière d'une partie arrière supérieure (46) de chacune des nervures d'introduction d'efforts (34, 40).

6. Volet mobile de bord d'attaque (16, 116) selon la revendication 5, **caractérisé en ce que** l'arrière-structure multicellulaire (21) est réalisée d'un seul tenant par injection sous vide.

7. Volet mobile de bord d'attaque (216, 316) selon la revendication 3 ou la revendication 4, **caractérisé en ce que** l'arrière-structure multicellulaire (21) comporte également une âme en nid-d'abeilles (225, 325) située entre lesdits revêtement arrière (28) et la portion extrados (23) de ladite structure multicellulaire (21).

8. Volet mobile de bord d'attaque (16, 116, 216, 316) selon l'une quelconque des revendications 3 à 7, **caractérisé en ce qu'**il comprend en outre un raidisseur inférieur (56) s'étendant selon la direction longitudinale de bord d'attaque (X), ledit raidisseur inférieur (56) assurant un raccordement entre la portion intrados (20) du revêtement aérodynamique (18), et le revêtement arrière (28) de l'arrière-structure multicellulaire (21).

9. Volet mobile de bord d'attaque (16, 116, 216, 316) selon la revendication 8, **caractérisé en ce que** ledit raidisseur inférieur (56) présente une section transversale en forme de L, ladite partie arrière (48) de chacune des nervures d'-introduction d'efforts (34, 40) reposant sur la branche latérale du L, et la portion intrados (20) du revêtement aérodynamique (18) reposant sur la base de ce L.

10. Volet mobile de bord d'attaque (16, 116, 216, 316) selon l'une quelconque des revendications précédentes, **caractérisé en ce qu'**il comprend en outre un raidisseur supérieur (58) s'étendant selon la direction longitudinale de bord d'attaque (X), ledit raidisseur supérieur (58) étant au contact de la partie avant (42) et de la partie supérieure (44) de chacune des nervures d'introduction d'efforts (34, 40).

11. Volet mobile de bord d'attaque (16, 116, 216, 316) selon l'une quelconque des revendications précédentes, **caractérisé en ce qu'**il comprend deux nervures d'extrémité (32).

12. Volet mobile de bord d'attaque (16, 216, 316) selon l'une quelconque des revendications précédentes, **caractérisé en ce que** la partie avant (42) de chacune des nervures d'introduction d'efforts (34, 40) présente une échancrure.

13. Volet mobile de bord d'attaque (16, 116 216, 316) selon l'une quelconque des revendications précédentes combinée aux revendications 9 et 10, **caractérisé en ce qu'**en section prise selon un plan quelconque orthogonal à ladite direction (X), en considérant un point (C) correspondant à un point d'appui avant du revêtement (18) sur ledit raidisseur supérieur (58), un point (D) correspondant à un point d'appui avant du revêtement (18) sur la partie inférieure (50) de chaque nervure d'introduction d'efforts (34, 40), un segment de droite (CD) et un milieu (E) de celui-ci, une droite (d) passant par ce milieu (E) et étant parallèle à une corde (26) de l'élément de voilure, un point (F) représentant un point d'intersection entre la droite (d) et ladite zone frontale (24), un point (G) correspondant à un point d'intersection entre cette droite (d) et la partie avant (42) de ladite nervure (40), une distance (X1) correspondant à la longueur d'un segment de droite (FG), et une distance (X2) correspondant à la longueur d'un segment de droite (EF), la distance (X1) est alors comprise entre une fois et demi et deux fois la longueur (X2).

14. Volet mobile de bord d'attaque (16, 116, 216, 316) selon l'une quelconque des revendications précédentes, **caractérisé en ce qu'**il est conçu de sorte qu'entre deux nervures d'introduction d'efforts quelconques (34, 40) directement consécutives dans la direction (X), ledit revêtement aérodynamique (18) puisse se déformer librement au-delà des parties avant (42) de ces nervures.

15. Volet mobile de bord d'attaque (16, 116, 216, 316) selon l'une quelconque des revendications précédentes, **caractérisé en ce que** le revêtement aérodynamique (18) est réalisé à l'aide d'un matériau ductile.

## Claims

1. Mobile flap on the leading edge (16, 116, 216, 316) of a principal wing of the aerofoil of an aircraft, the said flap consisting of an aerodynamic covering (18) presenting a frontal zone (24), an extrados portion (22) and an intrados portion (20), the said flap also containing a number of stress introduction ribs (34, 40) positioned along a longitudinal direction in the leading edge (X), each containing an upper part (44) and a lower part (50) respectively forming a whole with the extrados and intrados portions, **characterised in that** each of these ribs (34, 40) also presents a front part (42, 142) separate from the frontal zone (24) of the aerodynamic covering (18).

2. Mobile flap on the leading edge (16, 116, 216, 316) according to Claim 1, **characterised in that** it contains a multi-cellular back-structure (21) located in contact with and behind the stress introduction ribs (34, 40).

3. Mobile flap on the leading edge (16, 116, 216, 316) according to Claim 2, **characterised in that** the multi-cellular back-structure (21) contains an extrados portion (23) combined with the extrados portion (22) of the aerodynamic covering (18) and a rear covering (28) making up a rear covering of the flap and combined with a rear part (48) of each of the stress introduction ribs (34, 40), the said rear covering (28) extending to the trailing edge (20a) of the extrados portion (20) of the multi-cellular back-structure (21).

4. Mobile flap on the leading edge (16, 116, 216, 316) according to Claim 3, **characterised in that** the two extrados portions (22, 23) are combined with the upper part (44) of each of the stress introduction ribs (34, 40).

5. Mobile flap on the leading edge (16, 116) according to Claim 3 or Claim 4, **characterised in that** the multi-cellular back-structure also contains a set of boxes (25) located between the back structure (28) and the extrados portion (23) of the multi-cellular structure (21), the said set of boxes (25) being located behind an upper rear part (46) of each of the stress introduction ribs (34, 40).

6. Mobile flap on the leading edge (16, 116) according to Claim 5, **characterised in that** the multi-cellular structure (21) is produced using a single attachment by means of vacuum injection.

7. Mobile flap on the leading edge (216, 316) according to Claim 3 or Claim 4, **characterised in that** the multi-cellular back-structure (21) also contains a honeycomb core (225, 325) located between the back structure (28) and the extrados portion (23) of the multi-cellular structure (21).

8. Mobile flap on the leading edge (16, 116, 216, 316) according to any of Claims 3 to 7, **characterised in that** it also contains a lower stiffener (56) stretching longitudinally along the leading edge (X), the said lower stiffener (56) providing a connection between the intrados portion (20) of the aerodynamic covering (28) of the multi-cellular back-structure (21).

9. Mobile flap on the leading edge (16, 116, 216, 316) according to Claim 8, **characterised in that** the lower stiffener (56) provides a L-shaped transverse section, the said rear part (48) of each of the stress introduction ribs (34, 40) resting on the lateral branch of the L, and the intrados portion (20) of the aerodynamic covering (18) resting on the base of the L.

10. Mobile flap on the leading edge (16, 116, 216, 316) according to any of the above claims, **characterised in that** it also contains an upper stiffener (58) extending longitudinally along the leading edge (X), this upper stiffener being in contact with the front part (42) and the upper part (44) of each of the stress introduction ribs (34, 40).

11. Mobile flap on the leading edge (16, 116, 216, 316) according to any of the above claims, **characterised in that** it contains two end ribs (32).

12. Mobile flap on the leading edge (16, 216, 316) according to any of the above claims, **characterised in that** the front part (42) of each of the stress introduction ribs (34, 40) forms an undercut relief.

13. Mobile flap on the leading edge (16, 116, 216, 316) according to any of the above claims combined with Claims 9 and 10, **characterised in that** in the section shown according to any plane orthogonal to the direction (X), considering a point (C) that corresponds to a front support point for the covering (18) on the upper stiffener (58) and a point (D) that corresponds to a front support point for the covering (18) on the lower stiffener (50) of each stress introduction rib (34, 40), a straight section (CD) and a middle (E) of this, a straight section (d) passing through this middle and running parallel to a cord (26) in the aerofoil element, a point (F) that represents an intersection between the straight (d) and the frontal zone (24), a point (G) that represents an intersection between the straight (d) and the front part (42) of the rib (40), a distance (X1) corresponding to the length of a straight section (FG) and a distance (X2) corresponding to the length of a straight section (EF), the distance (X1) then being between one-and-a-half times and twice the length (X2).

14. Mobile flap on the leading edge (16, 116, 216, 316) according to any of the previous claims, **characterised in that** its design is such that between any two stress introduction ribs (34, 40) directly consecutive in the direction (X), the aerodynamic covering (18) can freely distort beyond the front parts (42) of these ribs.

15. Mobile flap on the leading edge (16, 116, 216, 316) according to any of the previous claims, **characterised in that** the aerodynamic covering (18) is produced using a ductile material.

## Patentansprüche

1. Bewegliche Vorderkantenklappe (16, 116, 216, 316) für einen Hauptflügel der Tragfläche eines Luftfahrzeugs, wobei die Klappe eine aerodynamische Verkleidung (18) umfasst, die eine frontale Zone (24) aufweist, einen Oberseitenabschnitt (22) sowie einen Unterseitenabschnitt (20), wobei die Klappe ferner eine Mehrzahl von Krafteinleitungsrippen (34, 40) umfasst, die entlang einer Längsrichtung der Vorderkante (X) beabstandet sind und jeweils über einen oberen Teil (44) und einen unteren Teil (50) verfügen, die mit dem Oberseiten- bzw. Unterseitenabschnitt (22, 20) der aerodynamischen Verkleidung (18) verbunden sind, **dadurch gekennzeichnet, dass** jede dieser Rippen (34, 40) ferner einen vorderen Teil (42, 142) aufweist, der von der frontalen Zone (24) der aerodynamischen Verkleidung (18) beabstandet ist.

2. Bewegliche Vorderkantenklappe (16, 116, 216, 316) nach Anspruch 1, **dadurch gekennzeichnet, dass** sie eine vielzellige Rückstruktur (21) umfasst, die in Kontakt mit und an der Rückseite der Krafteinleitungsrippen (34, 40) angeordnet ist.

3. Bewegliche Vorderkantenklappe (16, 116, 216, 316) nach Anspruch 2, **dadurch gekennzeichnet, dass** die vielzellige Rückstruktur (21) einen Oberseitenabschnitt (23) umfasst, der am Oberseitenabschnitt (22) der aerodynamischen Verkleidung (18) angebracht ist, sowie eine rückseitige Verkleidung (28), die eine rückseitige Verkleidung der Klappe bildet und an einem rückseitigen Teil (48) jeder der Krafteinleitungsrippen (34, 40) angebracht ist, wobei sich die rückseitige Verkleidung (28) bis zu einer Hinterkante (20a) des Oberseitenabschnitts (20) der vielzelligen Rückstruktur (21) erstreckt.

4. Bewegliche Vorderkantenklappe (16, 116, 216, 316) nach Anspruch 3, **dadurch gekennzeichnet, dass** die zwei Oberseitenabschnitte (22, 23) am oberen Teil (44) jeder der Krafteinleitungsrippen (34,40) angebracht sind.

5. Bewegliche Vorderkantenklappe (16, 116) nach Anspruch 3 oder nach Anspruch 4, **dadurch gekennzeichnet, dass** die vielzellige Rückstruktur (21) ferner eine Gruppe von Kästen (25) umfasst, die zwischen der rückseitigen Verkleidung (28) und dem Oberseitenabschnitt (23) der vielzelligen Struktur (21) angeordnet ist, wobei die Gruppe von Kästen (25) an der Rückseite eines rückseitigen oberen Teils (46) jeder der Krafteinleitungsrippen (34, 40) angeordnet ist.

6. Bewegliche Vorderkantenklappe (16, 116) nach Anspruch 5, **dadurch gekennzeichnet, dass** die vielzellige Rückstruktur (21) in einem Stück durch Vakuumspritzgießen hergestellt ist.

7. Bewegliche Vorderkantenklappe (216, 316) nach Anspruch 3 oder nach Anspruch 4, **dadurch gekennzeichnet, dass** die vielzellige Rückstruktur (21) ferner eine wabenförmige Seele (225, 325) umfasst, die zwischen der rückseitigen Verkleidung (28) und dem Oberseitenabschnitt (23) der vielzelligen Struktur (21) angeordnet ist.

8. Bewegliche Vorderkantenklappe (16, 116, 216, 316) nach einem der Ansprüche 3 bis 7, **dadurch gekennzeichnet, dass** sie ferner eine untere Versteifung (56) umfasst, die sich entlang der Längsrichtung der Vorderkante (X) erstreckt, wobei die untere Versteifung (56) eine Verbindung zwischen dem Unterseitenabschnitt (20) der aerodynamischen Verkleidung (18) und der rückseitigen Verkleidung (28) der vielzelligen Rückstruktur (21) gewährleistet.

9. Bewegliche Vorderkantenklappe (16, 116, 216, 316) nach Anspruch 8, **dadurch gekennzeichnet, dass** die untere Versteifung (56) einen L-förmigen Querschnitt aufweist, wobei der rückseitige Teil (48) jeder der Krafteinleitungsrippen (34, 40) auf dem seitlichen Arm des L ruht, und der Unterseitenabschnitt (20) der aerodynamischen Verkleidung (18) auf der Basis dieses L ruht.

10. Bewegliche Vorderkantenklappe (16, 116, 216, 316) nach einem der vorhergehenden Ansprüche, **dadurch gekennzeichnet, dass** sie ferner eine obere Versteifung (58) umfasst, die sich entlang der Längsrichtung der Vorderkante (X) erstreckt, wobei die obere Versteifung (58) in Kontakt ist mit dem vorderen Teil (42) und dem oberen Teil (44) jeder der Krafteinleitungsrippen (34, 40).

11. Bewegliche Vorderkantenklappe (16, 116, 216, 316) nach einem der vorhergehenden Ansprüche, **dadurch gekennzeichnet, dass** sie zwei Endrippen (32) umfasst.

12. Bewegliche Vorderkantenklappe (16, 116, 216, 316) nach einem der vorhergehenden Ansprüche, **dadurch gekennzeichnet, dass** der vordere Teil (42) jeder der Krafteinleitungsrippen (34, 40) eine Einbuchtung aufweist.

13. Bewegliche Vorderkantenklappe (16, 116, 216, 316) nach einem der vorhergehenden Ansprüche in Kombination mit den Ansprüchen 9 und 10, **dadurch gekennzeichnet, dass** in einem Querschnitt entlang einer beliebigen Ebene orthogonal zu der Richtung (X) bei Betrachtung eines Punkts (C) entsprechend einem vorderen Auflagepunkt der Verkleidung (18) auf der oberen Versteifung (58), eines Punkts (D) entsprechend einem vorderen Auflagepunkt der Verkleidung (18) auf dem unteren Teil (50) jeder Krafteinleitungsrippe (34, 40), eines Geradensegments (CD) und einer Mitte (E) desselben, einer Gerade (d), die durch diese Mitte (E) verläuft und parallel ist zu einer Sehne (26) des Tragflächenelements, eines Punkts (F), der einen Schnittpunkt zwischen der Gerade (d) und der frontalen Zone (24) darstellt, eines Punkts (G) entsprechend einem Schnittpunkt zwischen dieser Gerade (d) und dem vorderen Teil (42) der Rippe (40), eines Abstands (X1) entsprechend der Länge eines Geradensegments (FG), und eines Abstands (X2) entsprechend der Länge eines Geradensegments (EF), der Abstand (X1) dann zwischen eineinhalb Mal und zwei Mal der Länge (X2) enthalten ist.

14. Bewegliche Vorderkantenklappe (16, 116, 216, 316) nach einem der vorhergehenden Ansprüche, **dadurch gekennzeichnet, dass** sie derart gestaltet ist, dass zwischen zwei beliebigen Krafteinleitungsrippen (34, 40), die in der Richtung (X) direkt aufeinander folgen, die aerodynamische Verkleidung (18) sich frei über die vorderen Teile (42) dieser Rippen hinaus verformen kann.

15. Bewegliche Vorderkantenklappe (16, 116, 216, 316) nach einem der vorhergehenden Ansprüche, **dadurch gekennzeichnet, dass** die aerodynamische Verkleidung (18) mit Hilfe eines duktilen Materials hergestellt ist.
